# EUROPÄISCHE PATENTSCHRIFT

(11) **EP 2 186 394 B1**
(45) Veröffentlichungstag und Bekanntmachung des Hinweises auf die Patenterteilung: **13.03.2013**
(21) Anmeldenummer: 09168168.4
(22) Anmeldetag: 19.08.2009
(51) Int. Cl.: A01D 41/127

(54) **Anzeigeeinheit**
Display unit
Unité d'affichage

(30) Priorität: 14.11.2008 DE 102008057461
(43) Veröffentlichungstag der Anmeldung: 19.05.2010
(73) Patentinhaber: CLAAS Selbstfahrende Erntemaschinen GmbH, 33428 Harsewinkel (DE)
(72) Erfinder: Hieronymus, Peter, 33758, Schloß Holte - Stukenbrock (DE); Laing, Reinhard, 33428, Harsewinkel (DE); Römer, Jens, 34549, Edertal (DE); Grevinga, Markus, 48369, Saerbeck (DE)

(56) Entgegenhaltungen:
- EP-A1- 1 182 615
- EP-A1- 1 902 609
- US-A1- 2007 028 142
- US-A1- 2009 070 363

## Beschreibung

Die Erfindung betrifft eine Anzeigeeinheit zur Anzeige von Betriebsparametern einer Landmaschine mit einem Arbeitsaggregat sowie eine Landmaschine mit einem Arbeitsaggregat und einer Fahrerkabine.

In der EP 1 650 715 B1 ist ein Anzeigesystem offenbart, das abhängig von einer jeweils ausgewählten Menüebene eine Vielzahl von Betriebsparametern wie z.B. Fahrgeschwindigkeit, Kraftstoffverbrauch, Erntegutdurchsatz, Höhe eines Schneidwerkes über dem Boden anzeigt.

Einem Fahrer einer Landmaschine wird eine Vielzahl von Parametern wie z.B. Fahrgeschwindigkeit, Spritverbrauch, Erntegutdurchsatz, Korngesamtverluste, Hordenschüttlerverluste, Reinigungsverluste, Bruchkornanteil, Reinheitsgrad des geernteten Korns, Höhe Schneidwerk über Boden, Drehzahl der verschiedensten Arbeitsorgane angezeigt. Aus der Vielzahl der Parameter muss der Fahrer der Maschine die kritischen Parameter identifizieren und sodann geeignete Maßnahmen ergreifen (Änderung der Einstellparameter der Maschine - z.B. Reduzierung der Fahrgeschwindigkeit, wenn die Kornverluste zu hoch sind), um den Wirkungsgrad der landwirtschaftlichen Arbeitsmaschine zu verbessern.

Aufgrund der Vielzahl angezeigter Informationen muss der Fahrer sehr konzentriert die Anzeige verfolgen, um möglichst schnell zu erkennen, wenn die Maschine nicht mehr in einem optimalen Arbeitspunkt betrieben wird. Neben einer Überlastung des Fahrers ist vor allem der Nachteil zu nennen, dass der Fahrer der Maschine unter Umständen einen kritischen Zustand nicht rechtzeitig oder gar nicht erkennt.

Aus der EP 1 182 615 ist ferner eine Anzeigeeinrichtung bekannt geworden, die Betriebsparameter eines Flugzeugs unter anderem in einer Tortenanzeige visualisiert, wobei sich die Darstellung in Abhängigkeit der ermittelten Betriebsparameter ändert. Eine derartige Anzeige hat insbesondere den Nachteil, dass kritische Informationen nicht auf den ersten Blick erfassbar sind, da die Tortenanzeige unabhängig vom Wert der jeweiligen Betriebsparameter ihre ursprüngliche Form beibehält.

Es kann daher als eine Aufgabe der vorliegenden Erfindung betrachtet werden, eine Anzeigeeinheit zur Verfügung zu stellen, die die Überwachungs- und Steuerungsaufgaben eines Fahrers einer Landmaschine erleichtert.

Diese Aufgabe wird in den unabhängigen Ansprüchen gelöst. Weitere vorteilhafte Ausgestaltungen der Erfindung ergeben sich aus den Unteransprüchen.

Gemäß einer ersten beispielhaften Ausführungsform der Erfindung wird eine Anzeigeeinheit zur Anzeige von Betriebsparametern einer Landmaschine mit einem Arbeitsaggregat zur Verfügung gestellt, wobei die Anzeigeeinheit derart ausgestaltet ist, dass eine Mehrzahl von Teilflächen darstellbar sind, denen jeweils ein Betriebsparameter zugeordnet ist, wobei in einem ersten Betriebszustand des Arbeitsaggregates eine geschlossene Grundfläche mit einem zentralen geometrischen Schwerpunkt darstellbar ist und eine erste Teilfläche seitlich von einer zweiten Teilfläche begrenzt wird, und dass in einem zweiten Betriebszustand des Arbeitsaggregates eine Seite der ersten Teilfläche in ihrem mittleren Abstand zu dem zentralen geometrischen Schwerpunkt verändert ist und wobei Markierungen vorgesehen sind, die den zulässigen Arbeitsbereich der Betriebsparameter visualisieren und die Anzeigeeinheit derart ausgestaltet ist, dass die Teilfläche zwischen einer ersten Position und einer zweiten Position verschiebbar ist, wobei die erste Position einem ersten Grenzwert des zugehörigen Betriebsparameters und die zweite Position einem zweiten Grenzwert des zugehörigen Betriebsparameters entspricht.

Erfindungsgemäß werden die Werte der Betriebsparameter in z.B. geometrische Figuren umgewandelt (z.B. Kreissegmente) und in räumliche Beziehung zueinander gebracht (die Kreissegmente bilden zusammen eine Kreisfläche). Hierdurch können durch einfache Schaubilder (eine Kreisfläche) eine große Anzahl von Betriebsparameter gleichzeitig dargestellt werden. Ändern sich die Werte der Betriebsparameter können sich auch die einzelnen geometrischen Figuren ändern. Wächst der Betriebsparameter an, kann die entsprechende geometrische Figur z.B. größer dargestellt werden. Ein Anwachsen des Betriebsparameters kann auch durch ein Wegwandern von der ursprünglichen Position der geometrischen Figur verdeutlicht werden (das Kreissegment wandert nach außen). Hierdurch kann der Fahrer schnell auf eine Veränderung einzelner Betriebsparameter aus einer Vielzahl von Betriebsparametern hingewiesen werden.

Gemäß einer zweiten beispielhaften Ausführungsform der Erfindung wird eine Landmaschine zur Verfügung gestellt, wobei die Landmaschine ein Arbeitsaggregat und eine Fahrerkabine umfasst, wobei die Landmaschine eine Anzeigeeinheit nach einem der Ansprüche 1 bis 13 umfasst, wobei die Anzeigeeinheit derart ausgestaltet ist, dass eine Mehrzahl von Teilflächen darstellbar sind, denen jeweils ein Betriebsparameter zugeordnet ist, wobei in einem ersten Betriebszustand des Arbeitsaggregates eine geschlossene Grundfläche mit einem zentralen geometrischen Schwerpunkt darstellbar ist und eine erste Teilfläche seitlich von einer zweiten Teilfläche begrenzt wird, und dass in einem zweiten Betriebszustand des Arbeitsaggregates eine Seite der ersten Teilfläche in ihrem mittleren Abstand zu dem zentralen geometrischen Schwerpunkt veränderbar ist und wobei Markierungen vorgesehen sind, die den zulässigen Arbeitsbereich der Betriebsparameter visualisieren und die Anzeigeeinheit derart ausgestaltet ist, dass die Teilfläche zwischen einer ersten Position und einer zweiten Position verschiebbar ist, wobei die erste Position einem ersten Grenzwert des zugehörigen Betriebsparameters und die zweite Position einem zweiten Grenzwert des zugehörigen Betriebsparameters entspricht.

In einer weiteren erfindungsgemäßen Ausführungsform wird eine Anzeigeeinheit zur Verfügung gestellt, wobei in dem ersten Betriebszustand der Betriebsparameter unterhalb eines oberen Schwellenwert oder über einem unteren Schwellenwert liegt und in dem zweiten Betriebszustand der Betriebsparameter über einem oberen Schwellenwert und/oder unterhalb einem unterem Schwellenwert liegt. Gemäß der Erfindung soll dem Fahrer vor allem ein Verlassen einzelner Betriebsparameter aus deren Arbeitsbereich visualisiert werden, um ein Gegensteuern des Fahrers zu ermöglichen.

Gemäß einem weiteren Ausführungsbeispiel der vorliegenden Erfindung wird eine Anzeigeeinheit zur Verfügung gestellt, ferner aufweisend einen Umfang, der die Grundfläche in dem ersten Betriebszustand umfasst. Gemäß der Erfindung kann dem Fahrer die Veränderung einzelner Betriebsparameter auch dadurch verdeutlicht werden, dass deren entsprechende geometrische Figuren abgegrenzte Bereiche verlassen. Diese Bereiche können durch einen Umfang umschlossen sein.

Gemäß einer beispielhaften Ausführungsform der Erfindung wird eine Anzeigeeinheit zur Verfügung gestellt, wobei die Anzeigeeinheit derart ausgestaltet ist, dass die Anzahl und/oder die Größe der Teilflächen, insbesondere nach einer definierbaren Reihenfolge, bewegbar bzw. veränderbar sind.

In einer weiteren erfindungsgemäßen Ausführungsform wird eine Anzeigeeinheit zur Verfügung gestellt, wobei die Anzeigeeinheit derart ausgestaltet ist, dass der Abstand einer Seite der ersten Teilfläche zu dem zentralen geometrischen Schwerpunkt der Veränderung des Betriebsparameters entspricht.

Gemäß einem weiteren Ausführungsbeispiel der vorliegenden Erfindung wird eine Anzeigeeinheit zur Verfügung gestellt, wobei die Anzeigeeinheit derart ausgestaltet ist, dass die Anzeigeeinheit eine Touchscreenfunktion aufweist. Hierdurch können verschiedene Layouts innerhalb eines Bedienmenüs aufgerufen werden, wodurch die Anzeige unterschiedlicher Betriebsparameter in z.B. unterschiedlicher Auflösung ermöglicht wird.

Gemäß einer beispielhaften Ausführungsform der Erfindung wird eine Anzeigeeinheit zur Verfügung gestellt, wobei die Anzeigeeinheit derart ausgestaltet ist, dass im ersten Betriebszustand eine Form darstellbar ist, wobei die Form aus einer Gruppe entnommen ist, bestehend aus Kreisscheibenform mit kreissegmentförmigen Teilflächen, Kreisscheibenform mit kreisring-segmentförmigen Teilflächen, Polygonform mit gleichschenkligdreiecksförmigen Teilflächen, Ellipsenform. Die genannte Ausführungsform kann beispielsweise dadurch weitergebildet werden, dass durch Touchscreenbedienung ein dem Fahrer zweckmäßiger erscheinendes Gruppenmitglied aus der Gruppe ein zunächst angezeigtes Gruppenmitglied ersetzt.

In einer weiteren erfindungsgemäßen Ausführungsform wird eine Anzeigeeinheit zur Verfügung gestellt, wobei die Anzeigeeinheit derart ausgestaltet ist, dass sich die Farbe der ersten Teilfläche bei Überschreiten und/oder Unterschreiten eines Schwellenwertes eines Betriebsparameters verändert. Erfindungsgemäß kann z.B. eine notwendige Reihenfolge der Berücksichtigung verschiedener Betriebsparameter mittels Farben angedeutet werden bzw. eine Wichtigkeit vermittelt werden. Rot gekennzeichnete geometrische Figuren können z.B. vermitteln, dass die entsprechenden Betriebsparameter sich in einem kritischen Zustand befinden. Grün widergegebene Figuren können hingegen anzeigen, dass der entsprechende Betriebsparameter sich in einem unkritischen Zustand oder in einem Optimum befindet bei dem ein größtmöglicher Wirkungsgrad erreicht ist.

Gemäß einer beispielhaften Ausführungsform der Erfindung ist wenigstens einer der beiden Grenzwerte ein dynamisches Maximum oder Minimum. Ein dynamisches Maximum bzw. dynamisches Minimum ergibt sich z.B. immer dann, wenn sich der kritische Zustand eines Betriebsparameters im Zuge der Veränderung anderer Betriebsparameter verändert, weswegen der zulässige Arbeitsbereich des ersten Betriebsparameters ebenfalls variabel ist.

Vorteilhaft kann ferner vorgesehen sein dass die erste Position eine Markierung aufweist, wobei die Markierung für einen Fahrer sichtbar ausgebildet ist. Aufgrund von Markierungen können z.B. zulässige Arbeitsbereiche der entsprechenden Betriebsparameter visualisiert werden.

Gemäß einem weiteren Ausführungsbeispiel der vorliegenden Erfindung wird eine Anzeigeeinheit zur Verfügung gestellt, wobei die Betriebsparameter aus einer Gruppe entnommen sind, bestehend aus Fahrgeschwindigkeit, Kraftstoffverbrauch, Kühlmitteltemperatur, Erntegutdurchsatz, Korngesamtverlust, Reinigungsverlust, Hordenschüttlerverlust, Korntankvolumen, Bruchkornanteil, Reinheitsgrad von Erntegut, Höhe eines Schneidwerks über dem Boden, Drehzahl des mindestens einen Arbeitsaggregates, Entfernung zwischen zwei Landmaschinen.

Gemäß einer beispielhaften Ausführungsform der Erfindung wird eine Anzeigeeinheit zur Verfügung gestellt, wobei die Anzeigeeinheit derart ausgestaltet ist, dass ein Kennlinienverlauf eines Betriebsparameters darstellbar ist.

Als ein Gegenstand der Erfindung kann angesehen werden, eine Anzeigeeinheit, z.B. für landwirtschaftliche Arbeitsmaschinen wie Mähdrescher, Feldhäcksler usw., zur Verfügung zu stellen, die sich durch eine extrem übersichtliche Struktur in der Darstellung diverser Betriebsparameter der Arbeitsmaschine auszeichnet, was zu dem Effekt führt, dass der Fahrer der Arbeitsmaschine einen schnellen Überblick über kritische Betriebsparameter der Arbeitsmaschine erhält und diese auf einfache Weise ändern kann, wobei die Anzeigeeinrichtung selbst durch die Einstellmenüs führt, die zur Änderung des kritischen Parameters bedient werden müssen.

Insbesondere wird eine Anzeigeeinheit beschrieben, die eine qualitative Darstellung von Betriebsparametern ermöglicht, wobei bei Abweichung eines Betriebsparameters aus einem definierten Optimum eine Uniformität (Gleichmäßigkeit, Homogenität oder dgl.) der Grundfläche verloren geht.

Diese und andere Aspekte der vorliegenden Erfindung werden durch die Bezugnahme auf die hiernach beschriebenen beispielhaften Ausführungsformen erläutert und verdeutlicht.

Beispielhafte Ausführungsformen werden im Folgenden mit Bezugnahme auf die folgenden Zeichnungen beschrieben.
Fig. 1. zeigt eine Landmaschine;
Fig. 2. zeigt eine Landmaschine (Schlepper) mit einer adaptierten Ballenpresse;
Fig. 3. zeigt eine Anzeigevorrichtung;
Fig. 4. zeigt eine Anzeigevorrichtung;
Fig. 5. zeigt eine Anzeigeeinheit;
Fig. 6. zeigt eine Anzeigeeinheit;
Fig. 7. zeigt einen Ausschnitt eines Schaubildes einer Anzeigeeinheit;
Fig. 8. zeigt eine Anzeigevorrichtung;
Fig. 9. zeigt einen Ausschnitt eines Schaubildes einer Anzeigeeinheit.

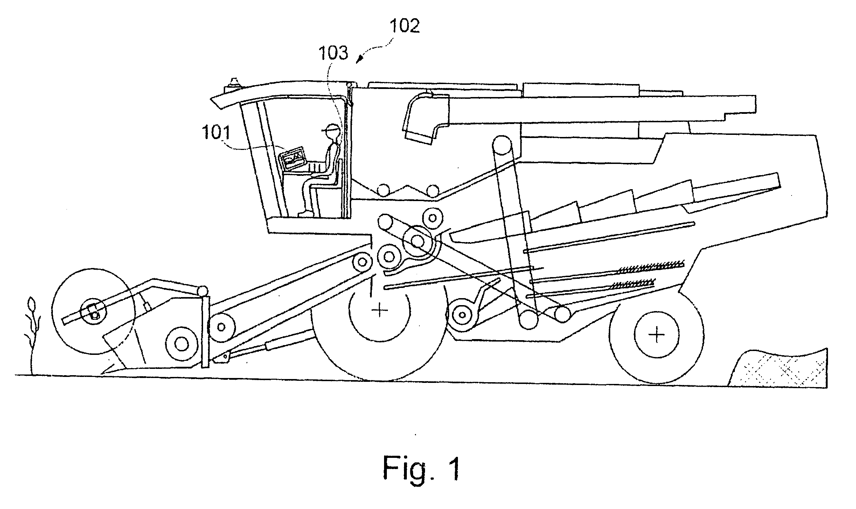

Figur 1 zeigt eine als Mähdrescher ausgeführte landwirtschaftliche Landmaschine und deren unterschiedliche Arbeitsaggregate. Die Landmaschine weist eine Führerkabine 102 auf, in der sich der Fahrer 103 während der Fahrt der Landmaschine aufhält. In der Führerkabine ist eine Anzeigevorrichtung 101 angeordnet, die dem Fahrer 103 den Status der Betriebsparameter der Landmaschine optisch darstellen kann. Aufgrund dieser optischen Darstellung kann der Fahrer 103 eine Steuerung der Landmaschine vornehmen. Die Anzeigevorrichtung 101 kann eine oder mehrere erfindungsgemäße Anzeigeeinheiten aufweisen.

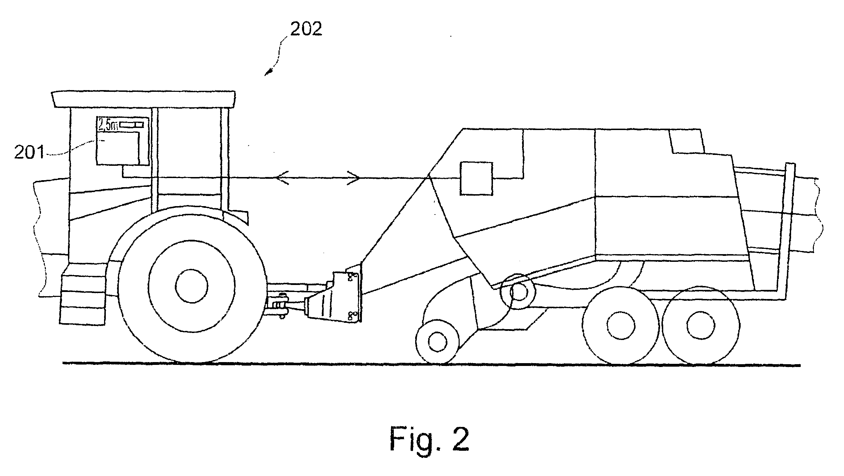

Fig. 2 zeigt einen Schlepper mit einer adaptierten landwirtschaftlichen Ballenpresse als zusätzliches Arbeitsaggregat. Der Schlepper weist eine Führerkabine 202 auf, wobei in der Führerkabine 202 eine

Anzeigevorrichtung 201 angeordnet ist. Ein Teil der Anzeigevorrichtung kann eine Anzeigeeinheit gemäß der vorliegenden Erfindung sein.

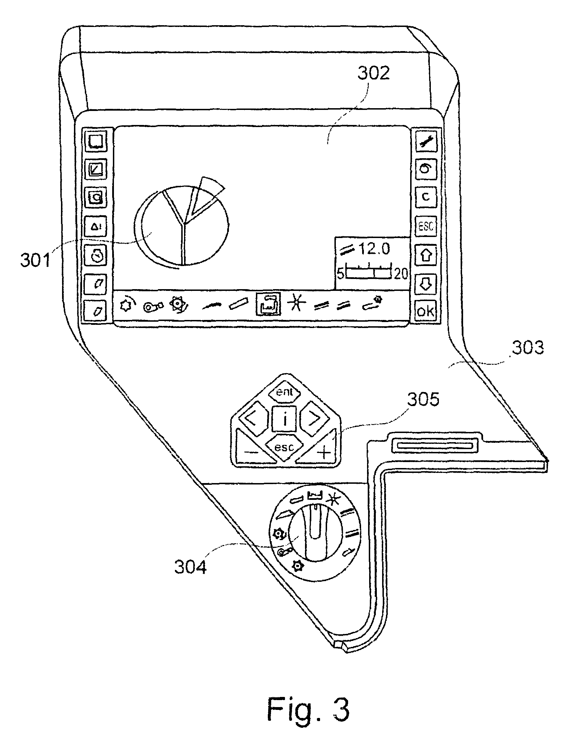

Fig. 3 zeigt eine Anzeigevorrichtung, die auch Bedienelemente 304, 305 aufweist, die auf einem Bedientableau 303 angeordnet sind. Ferner umfasst die Anzeigevorrichtung eine Anzeigeeinheit 302, die zur Darstellung diverser Betriebsparameter der Landmaschine geeignet ist. Hierbei ist die Anzeigeeinheit geeignet ein Schaubild 301 darzustellen, aus dessen geometrischer Form der Fahrer der Landmaschine Betriebsparameter ablesen kann, wobei das Schaubild insbesondere geeignet ist einen Gesamteindruck des Betriebszustands der Landmaschine zu vermitteln. Dieser Gesamteindruck wird durch das Umwandeln der Betriebsparameter in geometrische Figuren und das darauffolgende In-Beziehung-Setzen dieser geometrischen Figuren zueinander vermittelt. Die Werte der Betriebsparameter können sich hierbei in den Größen von geometrischen Figuren oder den Längen von Strecken der Figuren bzw. deren räumliche Anordnung zueinander widerspiegeln. Diese geometrischen Figuren werden dann ineinander oder nebeneinander oder sonst räumlich zueinander dargestellt. Hierbei kann z.B. das Einhalten oder Erreichen bestimmter geometrischer Figuren, in diesem Fall einer Grundfläche in Form eines Kreises, dem Fahrer einen bestimmten gesamten Betriebszustand verdeutlichen.

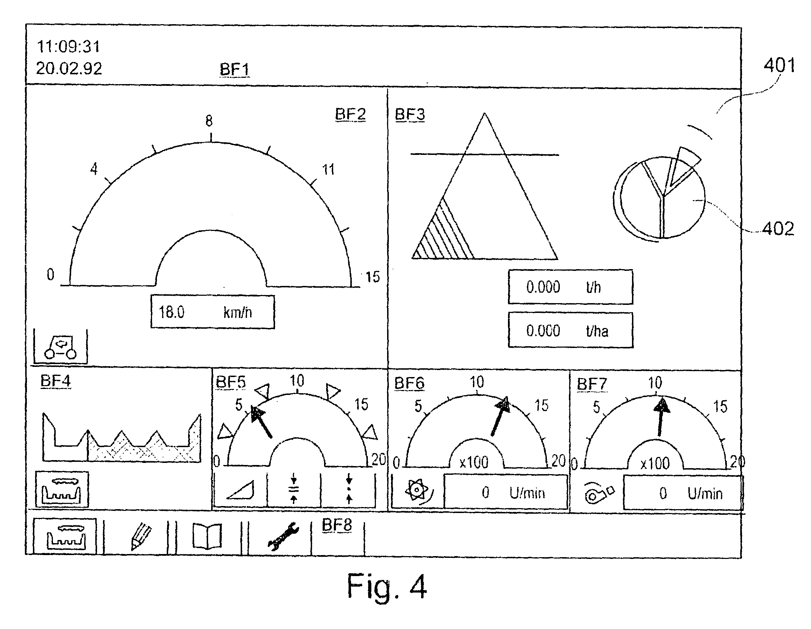

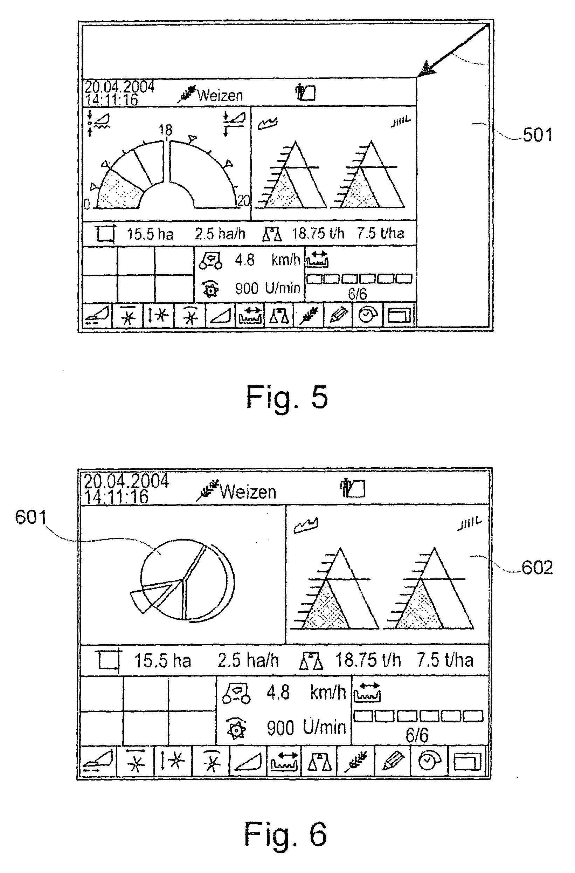

Fig. 4 zeigt eine Anzeigeeinheit 401 mit einem Schaubild 402 zur Visualisierung des Betriebszustandes oder von Ernteparametern einer Landmaschine. Fig. 5 zeigt eine Anzeigeeinheit 501 ohne ein Schaubild zur Visualisierung eines Betriebszustandes einer Landmaschine. Fig. 6 zeigt eine Anzeigeeinheit 602 mit einem Schaubild 601 zur Visualisierung eines Betriebszustandes einer Landmaschine.

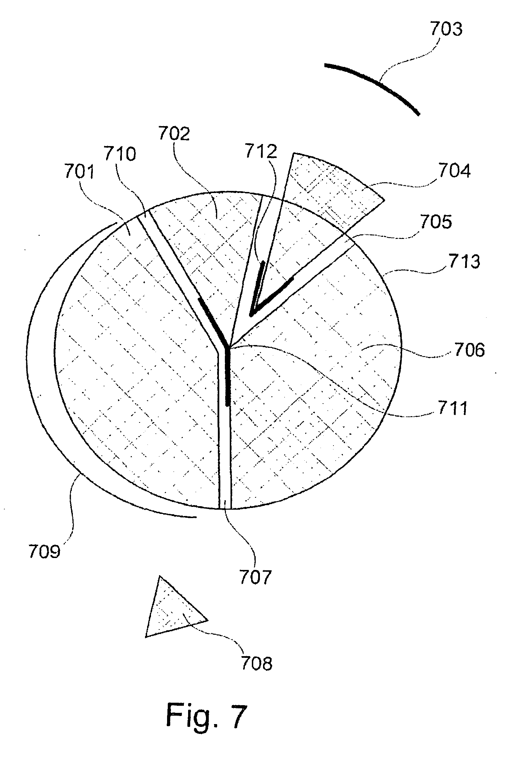

Fig. 7 zeigt ein Schaubild, dargestellt durch eine erfindungsgemäße Anzeigeeinheit. Dargestellt sind hierbei verschieden große Teilflächen 701, 702, 706, die verschiedenen Betriebsparametern entsprechen. In der Größe der Teilflächen 701, 702, 706 kann sich z.B. die Bedeutung bzw. Wichtigkeit der jeweiligen Betriebsparameter widerspiegeln. Ein Betriebsparameter, dem eine größere Bedeutung beizumessen ist, kann z.B. eine Teilfläche mit größerer Fläche zugeordnet werden. In der Variation der Flächen kann sich allerdings z.B. auch eine Reihenfolge der notwendigen Bearbeitung widerspiegeln. Zwischen den einzelnen Teilflächen bzw. Bereichen 701, 702, 706 sind z.B. Linien 710, 705, 707 angeordnet, um die einzelnen Teilflächen 701, 702, 706 für den Fahrer deutlich sichtbar zu trennen. Beispielsweise kann ein Betriebsparameter als Kreissegment 704 dargestellt werden. Die Veränderung des Betriebsparameters kann sich als Positionsänderung des Kreissegments 704 widerspiegeln. Z.B. kann sich das Kreissegment 704 zu einem Mittelpunkt 711 des geometrischen Gebildes hin bzw. von diesem weg bewegen. Zur Darstellung von Arbeitsbereichen kann die Anzeigeeinheit zusätzlich Markierungen 703, 712, 709 visualisieren. Z.B. kann festgelegt werden, dass eine Bewegung des Kreissegments 704 zwischen der Markierung 712 und der Markierung 703 dem Fahrer signalisieren soll, dass sich der Betriebsparameter in einem gewöhnlichen Arbeitsbereich befindet. Ein Verlassen das Kreissegments 704 aus dem Bereich, der von den Markierungen 712, 703 umrahmt wird, kann dem Fahrer verdeutlichen, dass der Betriebsparameter den Arbeitsbereich verlassen hat und daher ein Eingreifen des Fahrers notwendig wird.

Eine Grundfläche kann sich hierbei durch das bündige Zusammenfügen aller Kreissegmente 701, 702, 704, 706 ergeben. In diesem Fall (Fig. 7) ist die Grundfläche eine Kreisfläche. Es ist auch möglich statt einer Kreisfläche eine ausgefüllte Ellipse oder einen sonstigen konvexen oder konkaven geschlossenen Polygonzug als Grundfläche zu benutzen. Hierbei kann dem Fahrer signalisiert werden, dass die Landmaschine sich in einem definierten Zustand, z.B. Optimum, befindet, falls sich alle oder die meisten Teilflächen (hier Kreissegmente 701, 702, 704, 706) innerhalb der Grundfläche befinden. Gemäß der Erfindung kann die Anzeigeeinheit derart ausgebildet sein, dass die einzelnen geometrischen Teilflächen 701, 702, 706 zumindest teilweise ihre Farbe wechseln können. Z.B. könnte die Farbe des Kreissegments 704 von grün auf rot wechseln, falls das Kreissegment über die Markierung 703 hinaus nach außen wandert. Ferner ist schematisch ein Pfeil 708 dargestellt, der z.B. den Eingang zu einem Menü andeuten kann. Hierdurch kann dem Fahrer die Korrektur oder Optimierung des Betriebsparameters bzw. Ernteparameters ermöglicht werden, der der heraus gewanderten Teilfläche entspricht (hier nicht dargestellt). Es versteht sich, dass für jeden Betriebsparameter ein eigenes Menü zur Verfügung gestellt werden kann.

Das Schaubild nach Fig. 7 kann z.B. als "magisches Auge" bezeichnet werden. Das magische Auge hat hierbei die Gestalt einer Torte, deren Tortenstücke 701, 702, 706 jeweils einen Betriebsparameter repräsentieren. Solange alle Tortenstücke innerhalb des Umfangs 713 sind, sind alle Betriebsparameter z.B. in einem optimalen Bereich. In diesem Fall arbeitet die Maschine mit einem optimalen Wirkungsgrad. Sobald ein Betriebsparameter aus einem definierten Optimum (Schwellwert) herausfällt, bewegt sich das jeweilige Tortenstück 704 aus der ursprünglich geschlossenen Tortenkontur heraus. Der Fahrer erkennt sofort, welcher Betriebsparameter in welcher Intensität vom Optimum abweicht.

Die erfindungsgemäße Anzeigeeinheit kann auch so beschaffen sein, dass sich jedes Tortenstück 701, 702, 706 zwischen zwei Grenzwerten 712, 703 bewegen kann und in diesem Bereich z.B. als optimal gilt. Erfindungsgemäß kann auch softwaremäßig der optimale Bereich definiert werden und erst wenn dieser verlassen wird, wird das Tortenstück 704 seine Wanderung beginnen.

Eine erfindungsgemäße Anzeigeeinheit kann auch eine Touchscreenfunktionalität aufweisen. Hierbei wird z.B. durch das Berühren einer Teilfläche 701, 702, 706 eine andere Darstellung durch die Anzeigeeinheit angezeigt. Die andere Darstellung kann z.B. eine eher quantitative bzw. detailliertere Anzeige des entsprechenden Betriebsparameters sein. Hierdurch kann der Fahrer exakter einen einzelnen Betriebsparameter analysieren.

Eine erfindungsgemäße Anzeigeeinheit ist daher derart ausgebildet, dass ein Umschalten zwischen verschiedenen Anzeigelayouts ermöglicht wird. Die weiteren Darstellungen könnten z.B. editierbare Kennlinien der Betriebsparameter sein.

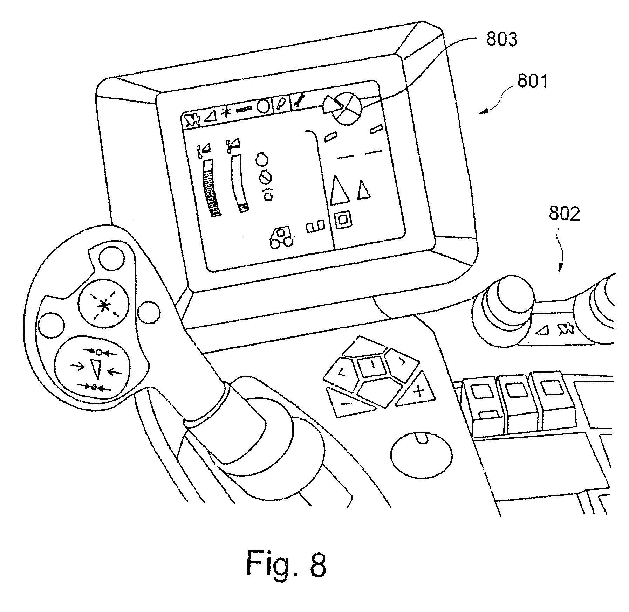

Fig. 8 zeigt die Anzeige der erfindungsgemäßen Anzeigeeinheit 801 nach dem Umschalten. Hierbei kann z.B. das vorherige Schaubild 803 verkleinert wiedergegeben werden z.B. damit der Fahrer weiterhin die anderen Betriebsparameter im Auge behalten kann bzw. damit der Fahrer weiß, wo er sich gerade im Bedienmenü aufhält. Ein erneutes Anklicken/Berühren des Schaubildes 803 kann z.B. zur Wiederherstellung der vorherigen Anzeige führen.

Der Fahrer kann indem er das aus der Tortenkontur heraus gewanderte Tortenstück via Touchscreen berührt, eine Bedienoberfläche anzeigen lassen, die neben dem verkleinerten magischen Auge 803 zusätzlich die einstellbaren Parameter anzeigt, die von dem Fahrer der Maschine zur Verbesserung des Arbeitsergebnisses geändert werden können. Mit Vornahme der Änderung eines oder mehrerer Parameter kann der Fahrer an dem weiterhin angezeigten magischen Auge 803 sofort erkennen, ob die Änderung zu einer Verbesserung des nicht-optimalen Parameters führt und ob die Änderung zugleich einen weiteren Parameter negativ beeinflusst (z.B. führt eine höhere Drehzahl des sogenannten Reinigungsgebläses zu einer größeren Luftströmung in der Reinigungseinrichtung, die einerseits den Reinheitsgrad des geernteten Gutes erhöht aber auch mehr Körner aus dem Mähdrescher bläst und damit die Reinigungsverluste erhöht).

Nachdem eine optimale Einstellung gefunden wurde, wird durch nochmaliges Berühren des magischen Auges 803 die Anzeige wieder auf die Großbilddarstellung des magischen Auges 803 umgeschaltet.

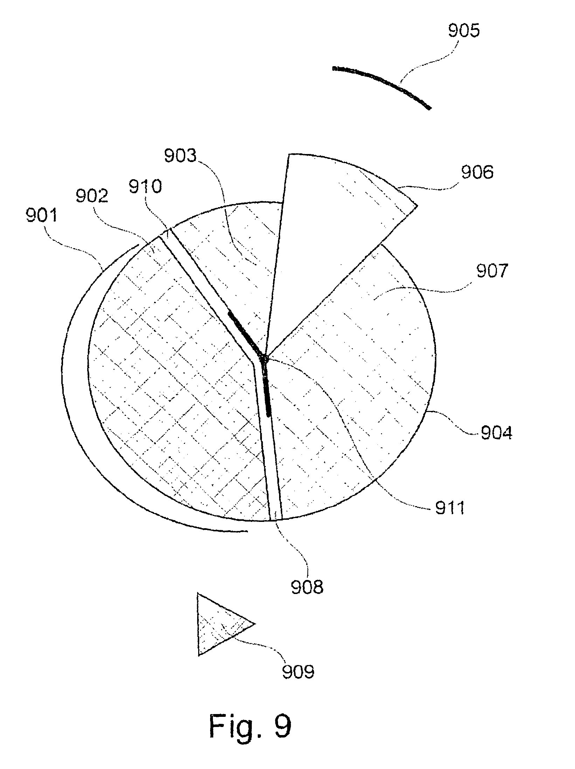

Fig. 9 zeigt ein magisches Auge mit Teilflächen 902, 903, 907, die durch Linien 910, 908 visuell getrennt sind. Ferner ist ein Umfang 904 dargestellt, der die Teilflächen 902, 903, 907 in z.B. einem ersten Betriebszustand umschließt. Außerdem sind Markierungen 901, 905 dargestellt, die Bereiche der Betriebsparameter repräsentieren. Ferner ist ein schematischer Pfeil 909 gezeigt, der z.B. einer Fahrtrichtung der Landmaschine entsprechen kann bzw. eine Hilfestellung zur Menüführung darstellt. Eine Veränderung eines Betriebsparameters kann z.B. zu einer Bewegung eines Kreissegments 906 führen. Ebenso ist es möglich, dass das Kreissegment 906 mit z.B. einer Zunahme eines Betriebsparameters wächst bzw. bei Abnahme eines Betriebsparameters schrumpft. Hierbei kann z.B. zumindest ein Punkt 911 des Kreissegments 906 ortsfest bleiben.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Anzeigevorrichtung,
- 102: Führerkabine,
- 103: Fahrer,
- 201: Anzeigevorrichtung,
- 202: Führerkabine,
- 301: Schaubild eines "magisches Auges",
- 302: Anzeigeeinheit,
- 303: Bedientableau,
- 304: Bedienelement,
- 305: Bedienelement,
- 401: Anzeigeeinheit,
- 402: Schaubild eines "magisches Auges",
- 501: Anzeigeeinheit,
- 601: Schaubild eines "magisches Auges",
- 602: Anzeigeeinheit,
- 701: Teilfläche,
- 702: Teilfläche,
- 703: Markierung,
- 704: Teilfläche,
- 705: Linie,
- 706: Teilfläche,
- 707: Linie,
- 708: Pfeil,
- 709: Markierung,
- 710: Linie,
- 711: Mittelpunkt (zentraler geometrischer Schwerpunkt),
- 712: Markierung,
- 713: Umfang,
- 801: Anzeigeeinheit,
- 802: Bedientableau,
- 901: Markierung,
- 902: Teilfläche,
- 903: Teilfläche,
- 904: Umfang,
- 905: Markierung,
- 906: Teilfläche,
- 907: Teilfläche,
- 908: Linie,
- 909: Pfeil,
- 910: Linie,
- 911: ortsfester Punkt.

## Patentansprüche

1. Anzeigeeinheit (302, 401, 602, 801) zur Anzeige von Betriebsparametern einer Landmaschine mit einem Arbeitsaggregat, wobei die Anzeigeeinheit (302, 401, 602, 801) derart ausgestaltet ist, dass eine Mehrzahl von Teilflächen (701, 702, 704, 706, 902, 903, 906, 907) darstellbar sind, denen jeweils ein Betriebsparameter zugeordnet ist, wobei in einem ersten Betriebszustand des Arbeitsaggregates eine geschlossene Grundfläche mit einem zentralen geometrischen Schwerpunkt (711, 911) darstellbar ist und eine erste Teilfläche (701, 702, 704, 706, 902, 903, 906, 907) seitlich von einer zweiten Teilfläche (701, 702, 704, 706, 902, 903, 906, 907) begrenzt wird, und wobei in einem zweiten Betriebszustand des Arbeitsaggregates eine Seite der ersten Teilfläche (701, 702, 704, 706, 902, 903, 906, 907) in ihrem mittleren Abstand zu dem zentralen geometrischen Schwerpunkt (711, 911) verändert ist, **dadurch gekennzeichnet, dass** Markierungen (703, 709, 712, 901, 905) vorgesehen sind, die den zulässigen Arbeitsbereich der Betriebsparameter visualisieren und die Anzeigeeinheit (302, 401, 602, 801) derart ausgestaltet ist, dass die Teilfläche (701, 702, 704, 706, 902, 903, 906, 907) zwischen einer ersten Position und einer zweiten Position verschiebbar ist, wobei die erste Position einem ersten Grenzwert (712, 711, 911) des zugehörigen Betriebsparameters und die zweite Position einem zweiten Grenzwert (703, 709, 901, 905) des zugehörigen Betriebsparameters entspricht.

2. Anzeigeeinheit (302, 401, 602, 801) nach Anspruch 1, wobei in dem ersten Betriebszustand der Betriebsparameter unterhalb eines oberen Schwellenwertes oder über einem unteren Schwellenwert liegt und in dem zweiten Betriebszustand der Betriebsparameter über einem oberen Schwellenwert und/oder unterhalb einem unterem Schwellenwert liegt.

3. Anzeigeeinheit (302, 401, 602, 801) nach Anspruch 1 oder 2, ferner aufweisend einen Umfang (713, 904), der die Grundfläche in dem ersten Betriebszustand umfasst.

4. Anzeigeeinheit (302, 401, 602, 801) nach einem der vorstehenden Ansprüche, wobei die Anzeigeeinheit (302, 401, 602, 801) derart ausgestaltet ist, dass die Anzahl und/oder die Größe der Teilflächen (701, 702, 704, 706, 902, 903, 906, 907), insbesondere nach einer definierbaren Reihenfolge, bewegbar bzw. veränderbar sind.

5. Anzeigeeinheit (302, 401, 602, 801) nach einem der vorstehenden Ansprüche, wobei die Anzeigeeinheit (302, 401, 602, 801) derart ausgestaltet ist, dass der Abstand einer Seite der ersten Teilfläche (701, 702, 704, 706, 902, 903, 906, 907) zu dem zentralen geometrischen Schwerpunkt (711, 911) der Veränderung des Betriebsparameters entspricht.

6. Anzeigeeinheit (302, 401, 602, 801) nach einem der vorstehenden Ansprüche, wobei die Anzeigeeinheit (302, 401, 602, 801) derart ausgestaltet ist, dass die Anzeigeeinheit (302, 401, 602, 801) eine Touchscreenfunktion aufweist.

7. Anzeigeeinheit (302, 401, 602, 801) nach einem der vorstehenden Ansprüche, wobei die Anzeigeeinheit (302, 401, 602, 801) derart ausgestaltet ist, dass im ersten Betriebszustand eine Form darstellbar ist, wobei die Form aus einer Gruppe entnommen ist, bestehend aus Kreisscheibenform mit kreissegmentförmigen Teilflächen, Kreisscheibenform mit kreisring-segmentförmigen Teilflächen, Polygonform mit gleichschenkligdreiecksförmigen Teilflächen, Ellipsenform.

8. Anzeigeeinheit (302, 401, 602, 801) nach einem der vorstehenden Ansprüche, wobei die Anzeigeeinheit (302, 401, 602, 801) derart ausgestaltet ist, dass sich die Farbe der ersten Teilfläche (701, 702, 704, 706, 902, 903, 906, 907) bei Überschreiten und/oder Unterschreiten eines Schwellenwertes eines Betriebsparameters verändert.

9. Anzeigeeinheit (302, 401, 602, 801) nach Anspruch 1, wobei wenigstens einer der beiden Grenzwerte ein dynamisches Maximum oder Minimum ist.

10. Anzeigeeinheit (302, 401, 602, 801) nach Anspruch 9, wobei die erste Position eine Markierung (703, 709, 712, 901, 905) aufweist, wobei die Markierung (703, 709, 712, 901, 905) für einen Fahrer sichtbar ausgebildet ist.

11. Anzeigeeinheit (302, 401, 602, 801) nach einem der vorstehenden Ansprüche, wobei die Betriebsparameter aus einer Gruppe entnommen sind, bestehend aus Fahrgeschwindigkeit, Kraftstoffverbrauch, Kühlmitteltemperatur, Erntegutdurchsatz, Komgesamtverlust, Reinigungsverlust, Hordenschüttlerverlust, Korntankvolumen, Bruchkornanteil, Reinheitsgrad von Erntegut, Höhe eines Schneidwerks über dem Boden, Drehzahl des mindestens einen Arbeitsaggregates, Entfernung zwischen zwei Landmaschinen.

12. Anzeigeeinheit (302, 401, 602, 801) nach einem der vorstehenden Ansprüche, wobei die Anzeigeeinheit (302, 401, 602, 801) derart ausgestaltet ist, dass ein Kennlinienverlauf eines Betriebsparameters darstellbar ist.

13. Landmaschine mit einem Arbeitsaggregat und einer Fahrerkabine, wobei die Landmaschine eine Anzeigeeinheit (302, 401, 602, 801) nach einem der vorstehenden Ansprüche umfasst, wobei die Anzeigeeinheit (302, 401, 602, 801) derart ausgestaltet ist, dass eine Mehrzahl von Teilflächen (701, 702, 704, 706, 902, 903, 906, 907) darstellbar sind, denen jeweils ein Betriebsparameter zugeordnet ist, wobei in einem ersten Betriebszustand des Arbeitsaggregates eine geschlossene Grundfläche mit einem zentralen geometrischen Schwerpunkt (711, 911) darstellbar ist und eine erste Teilfläche (701, 702, 704, 706, 902, 903, 906, 907) seitlich von einer zweiten. Teilfläche 701, 702, 704, 706, 902, 903, 906, 907) begrenzt wird, und wobei in einem zweiten Betriebszustand des Arbeitsaggregates eine Seite der ersten Teilfläche (701, 702, 704, 706, 902, 903, 906, 907) in ihrem mittleren Abstand zu dem zentralen geometrischen Schwerpunkt (711, 911) veränderbar ist und wobei Markierungen (703, 709, 712, 901, 905) vorgesehen sind, die den zulässigen Arbeitsbereich der Betriebsparameter visualisieren und die Anzeigeeinheit (302, 401, 602, 801) derart ausgestaltet ist, dass die Teilfläche (701, 702, 704, 706, 902, 903, 906, 907) zwischen einer ersten Position und einer zweiten Position verschiebbar ist, wobei die erste Position einem ersten Grenzwert (712, 711, 911) des zugehörigen Betriebsparameters und die zweite Position einem zweiten Grenzwert (703, 709, 901, 905) des zugehörigen Betriebsparameters entspricht.

## Claims

1. A display unit (302, 401, 602, 801) for displaying operating parameters of an agricultural machine having a working assembly, wherein the display unit (302, 401, 602, 801) is of such a configuration that a plurality of surface portions (701, 702, 704, 706, 902, 903, 906, 907) can be represented, with each of which a respective operating parameter is associated, wherein in a first operating condition of the working assembly a closed main surface with a central geometrical centre of gravity (711, 911) can be represented and a first surface portion (701, 702, 704, 706, 902, 903, 906, 907) is delimited laterally by a second surface portion (701, 702, 704, 706, 902, 903, 906, 907) and wherein in a second operating condition of the working assembly a side of the first surface portion (701, 702, 704, 706, 902, 903, 906, 907) is changed in its mean spacing relative to the central geometrical centre of gravity (711, 911), **characterised in that** there are provided markings (703, 709, 712, 901, 905) which display the permissible working range of the operating parameters and the display unit (302, 401, 602, 801) is of such a configuration that the surface portion (701, 702, 704, 706, 902, 903, 906, 907) is displaceable between a first position and a second position, wherein the first position corresponds to a first limit value (712, 711, 911) of the associated operating parameter and the second position corresponds to a second limit value (703, 709, 901, 905) of the associated operating parameter.

2. A display unit (302, 401, 602, 801) according to claim 1 wherein in the first operating condition the operating parameter is below an upper threshold value or above a lower threshold value and in the second operating condition the operating parameter is above an upper threshold value and/or below a lower threshold value.

3. A display unit (302, 401, 602, 801) according to claim 1 or claim 2 and further having a periphery (713, 904) which surrounds the main surface in the first operating condition.

4. A display unit (302, 401, 602, 801) according to one of the preceding claims wherein the display unit (302, 401, 602, 801) is of such a configuration that the number and/or size of the surface portions (701, 702, 704, 706, 902, 903, 906, 907) are movable or variable, in particular in accordance with a definable sequence.

5. A display unit (302, 401, 602, 801) according to one of the preceding claims wherein the display unit (302, 401, 602, 801) is of such a configuration that the spacing of a side of the first surface portion (701, 702, 704, 706, 902, 903, 906, 907) relative to the central geometrical centre of gravity (711, 911) corresponds to the change in the operating parameter.

6. A display unit (302, 401, 602, 801) according to one of the preceding claims wherein the display unit (302, 401, 602, 801) is of such a configuration that the display unit (302, 602, 801) has a touch screen function.

7. A display unit (302, 401, 602, 801) according to one of the preceding claims wherein the display unit (302, 401, 602, 801) is of such a configuration that in the first operating condition a shape can be represented, wherein the shape is taken from the group comprising a circular disc shape with surface portions in the shape of segments of a circle, a circular disc shape with surface portions in the shape of segments of a circular ring, a polygonal shape with surface portions in the shape of isosceles triangles, and an elliptical shape.

8. A display unit (302, 401, 602, 801) according to one of the preceding claims wherein the display unit (302, 401, 602, 801) is of such a configuration that the colour of the first surface portion (701, 702, 704, 706, 902, 903, 906, 907) changes when an operating parameter exceeds and/or falls below a threshold value thereof.

9. A display unit (302, 401, 602, 801) according to claim 1 wherein at least of the two limit values is a dynamic maximum or minimum.

10. A display unit (302, 401, 602, 801) according to claim 9 wherein the first position has a marking (703, 709, 712, 901, 905), wherein the marking (703, 709, 712, 901, 905) is adapted to be visible for a driver.

11. A display unit (302, 401, 602, 801) according to one of the preceding claims wherein the operating parameters are taken from a group comprising travel speed, fuel consumption, coolant temperature, crop material throughput, overall grain loss, cleaning loss, straw walker loss, grain tank volume, broken grain component, degree of cleanliness of crop material, height of a cutting mechanism above the ground, rotary speed of the at least one working assembly and distance between two agricultural machines.

12. A display unit (302, 401, 602, 801) according to one of the preceding claims wherein the display unit (302, 401, 602, 801) is of such a configuration that a characteristic configuration of an operating parameter can be represented.

13. An agricultural machine comprising a working assembly and a driver's cab, wherein the agricultural machine includes a display unit (302, 401, 602, 801) according to one of the preceding claims, wherein the display unit (302, 401, 602, 801) is of such a configuration that a plurality of surface portions (701, 702, 704, 706, 902, 903, 906, 907) can be represented, with each of which a respective operating parameter is associated, wherein in a first operating condition of the working assembly a closed main surface with a central geometrical centre of gravity (711, 911) can be represented and a first surface portion (701, 702, 704, 706, 902, 903, 906, 907) is delimited laterally by a second surface portion (701, 702, 704, 706, 902, 903, 906, 907) and wherein in a second operating condition of the working assembly a side of the first surface portion (701, 702, 704, 706, 902, 903, 906, 907) is changed in its mean spacing relative to the central geometrical centre of gravity (711, 911), and wherein there are provided markings (703, 709, 712, 901, 905) which display the permissible working range of the operating parameters and the display unit (302, 401, 602, 801) is of such a configuration that the surface portion (701, 702, 704, 706, 902, 903, 906, 907) is displaceable between a first position and a second position, wherein the first position corresponds to a first limit value (712, 711, 911) of the associated operating parameter and the second position corresponds to a second limit value (703, 709, 901, 905) of the associated operating parameter.

## Revendications

1. Unité d'affichage (302, 401, 602, 801) pour afficher des paramètres de fonctionnement d'une machine agricole comportant un organe de travail, l'unité d'affichage (302, 401, 602, 801) étant conçue de façon à pouvoir représenter une pluralité de surfaces partielles (701, 702, 704, 706, 902, 903, 906, 907), à chacune desquelles est associé un paramètre de fonctionnement, une surface de base fermée avec un point central géométrique (711, 911) pouvant être représentée dans un premier état de fonctionnement de l'organe de travail et une première surface partielle (701, 702, 704, 706, 902, 903, 906, 907) étant limitée latéralement par une deuxième surface partielle (701, 702, 704, 706, 902, 903, 906, 907) et, dans un deuxième état de fonctionnement de l'organe de travail, la distance moyenne entre un côté de la première surface partielle (701, 702, 704, 706, 902, 903, 906, 907) et le point central géométrique (711, 911) étant modifiée, **caractérisée en ce qu'**il est prévu des marquages (703, 709, 712, 901, 905) qui visualisent la zone de travail admissible des paramètres de fonctionnement, et **en ce que** l'unité d'affichage (302, 401, 602, 801) est conçue de façon que la surface partielle (701, 702, 704, 706, 902, 903, 906, 907) soit déplaçable entre une première position et une deuxième position, la première position correspondant à une première valeur limite (712, 711, 911) du paramètre de fonctionnement associé et la deuxième position à une deuxième valeur limite (703, 709, 901, 905) du paramètre de fonctionnement associé.

2. Unité d'affichage (302, 401, 602, 801) selon la revendication 1, dans laquelle, dans le premier état de fonctionnement, le paramètre de fonctionnement se situe au-dessous d'une valeur seuil supérieure ou au-dessus d'une valeur seuil inférieure et, dans le deuxième état de fonctionnement, le paramètre de fonctionnement se situe au-dessus d'une valeur seuil supérieure et/ou au-dessous d'une valeur seuil inférieure.

3. Unité d'affichage (302, 401, 602, 801) selon la revendication 1 ou 2, présentant en plus un pourtour (713, 904) qui entoure la surface de base dans le premier état de fonctionnement.

4. Unité d'affichage (302, 401, 602, 801) selon une des revendications précédentes, l'unité d'affichage (302, 401, 602, 801) étant conçue de façon que le nombre et/ou la taille des surfaces partielles (701, 702, 704, 706, 902, 903, 906, 907) puissent être déplacés ou modifiés, en particulier dans un ordre définissable.

5. Unité d'affichage (302, 401, 602, 801) selon une des revendications précédentes, l'unité d'affichage (302, 401, 602, 801) étant conçue de façon que la distance entre un côté de la première surface partielle (701, 702, 704, 706, 902, 903, 906, 907) et le point central géométrique (711, 911) corresponde au changement du paramètre de fonctionnement.

6. Unité d'affichage (302, 401, 602, 801) selon une des revendications précédentes, l'unité d'affichage (302, 401, 602, 801) étant conçue de façon que l'unité d'affichage (302, 401, 602, 801) possède une fonction d'écran tactile.

7. Unité d'affichage (302, 401, 602, 801) selon une des revendications précédentes, l'unité d'affichage (302, 401, 602, 801) étant conçue de façon que, dans le premier état de fonctionnement, une forme puisse être représentée, la forme étant choisie parmi un groupe comprenant : disque circulaire avec des surfaces partielles en forme de segment de cercle, disque circulaire avec des surfaces partielles en forme de segment d'anneau de cercle, polygone avec des surfaces partielles en forme de triangle isocèle, ellipse.

8. Unité d'affichage (302, 401, 602, 801) selon une des revendications précédentes, l'unité d'affichage (302, 401, 602, 801) étant conçue de façon que la couleur de la première surface partielle (701, 702, 704, 706, 902, 903, 906, 907) change quand une valeur seuil d'un paramètre de fonctionnement est dépassée vers le haut et/ou vers le bas.

9. Unité d'affichage (302, 401, 602, 801) selon la revendication 1, dans laquelle au moins une des deux valeurs limites est un maximum ou un minimum dynamique.

10. Unité d'affichage (302, 401, 602, 801) selon la revendication 9, dans laquelle la première position présente un marquage (703, 709, 712, 901, 905), le marquage (703, 709, 712, 901, 905) étant conçu pour être visible par un conducteur.

11. Unité d'affichage (302, 401, 602, 801) selon une des revendications précédentes, dans laquelle les paramètres de fonctionnement sont choisis parmi un groupe comprenant : vitesse de marche, consommation de carburant, température du liquide de refroidissement, débit de produit de récolte, perte totale de grain, perte de nettoyage, perte au secoueur à claies, volume de la trémie à grains, proportion de grains brisés, degré de propreté du produit de récolte, hauteur d'un tablier de coupe au-dessus du sol, vitesse de rotation dudit au moins un organe de travail, distance entre deux machines agricoles.

12. Unité d'affichage (302, 401, 602, 801) selon une des revendications précédentes, l'unité d'affichage (302, 401, 602, 801) étant conçue de façon à pouvoir représenter le tracé d'une courbe caractéristique d'un paramètre de fonctionnement.

13. Machine agricole comportant un organe de travail et une cabine de conduite, la machine agricole comprenant une unité d'affichage (302, 401, 602, 801) selon une des revendications précédentes, l'unité d'affichage (302, 401, 602, 801) étant conçue de façon à pouvoir représenter une pluralité de surfaces partielles (701, 702, 704, 706, 902, 903, 906, 907), à chacune desquelles est associé un paramètre de fonctionnement, une surface de base fermée avec un point central géométrique (711, 911) pouvant être représentée dans un premier état de fonctionnement de l'organe de travail, et une première surface partielle (701, 702, 704, 706, 902, 903, 906, 907) étant limitée latéralement par une deuxième surface partielle (701, 702, 704, 706, 902, 903, 906, 907) et, dans un deuxième état de fonctionnement de l'organe de travail, la distance moyenne entre un côté de la première surface partielle (701, 702, 704, 706, 902, 903, 906, 907) et le point central géométrique (711, 911) étant modifiable, et des marquages (703, 709, 712, 901, 905) étant prévus, qui visualisent la zone de travail admissible des paramètres de fonctionnement, et l'unité d'affichage (302, 401, 602, 801) étant conçue de façon que la surface partielle (701, 702, 704, 706, 902, 903, 906, 907) soit déplaçable entre une première position et une deuxième position, la première position correspondant à une première valeur limite (712, 711, 911) du paramètre de fonctionnement associé et la deuxième position à une deuxième valeur limite (703, 709, 901, 905) du paramètre de fonctionnement associé.
